# EUROPÄISCHE PATENTSCHRIFT

(11) **EP 4 191 117 B1**
(45) Veröffentlichungstag und Bekanntmachung des Hinweises auf die Patenterteilung: **25.06.2025**
(21) Anmeldenummer: 22208273.7
(22) Anmeldetag: 18.11.2022
(51) Int. Cl.: F17C 3/00, F16B 5/02

(54) **VORRICHTUNG**
APPARATUS
APPAREIL

(30) Priorität: 03.12.2021 DE 102021131892
(43) Veröffentlichungstag der Anmeldung: 07.06.2023
(73) Patentinhaber: ArianeGroup GmbH, 82024 Taufkirchen (DE)
(72) Erfinder: Hollenbach, Bert, Bremen (DE)
(74) Vertreter: Marschall, Stefan

(56) Entgegenhaltungen:
- WO-A1-2018/019651
- US-A1- 2015 267 864
- US-A1- 2018 038 547
- US-B2- 10 179 304

## Beschreibung

Die Erfindung betrifft ein Anschlusssystem mit einem kryogenen Tank, dessen Tankwand mit einem ersten Material gebildet ist, wobei das Anschlusssystem ein Anschlussstück für ein an den Tank anzubindendes Bauteil aufweist, und wobei das Anschlussstück mit einem zweiten Material gebildet ist und das Anschlussstück an einer Tankaußenseite und im Wesentlichen deckungsgleich zu einer Durchgangsöffnung der Tankwand positioniert ist, und wobei mindestens ein Dichtelement vorgesehen ist, und das erste und das zweite Material unterschiedliche Wärmeausdehnungskoeffizienten aufweisen.

Bei Trägerraketen werden aufgrund der hohen Energiedichte flüssiger, das heißt extrem kalter (kryogener) Wasserstoff (LH2 bei 20 K - 253,15 °C) und Sauerstoff (LOX bei 90 K bzw. -183,15 °C) als Treibstoff eingesetzt. In der Regel sind die Tanks von Trägerraketen mit Aluminium gefertigt und Anschlussteile wie Leitungen, Sensoren oder dergleichen können direkt mit Gewindeaufnahmen in der Tankwand verbunden werden. Üblicherweise finden zur Abdichtung von Schraubverbindungen metallische Dichtungen Verwendung.

Durch den Einsatz von kohlenstofffaserverstärkten Kunststoffen (CFK bzw. engl. CFRP) zur Herstellung von Treibstofftanks kryogener Trägerraketen können durch lastoptimiertes Design erhebliche Gewichtsvorteile gegenüber der Metallbauform erzielt werden. Hierbei können die ungleichen Wärmeausdehnungskoeffizienten der verschiedenen Materialen zu thermisch bedingten mechanischen Spannungen und Verformungen führen. Von Nachteil bei CFK-Bauteilen ist unter anderem, dass sich Gewindeaufnahmen nur mit einem hohen Aufwand realisieren lassen. Zudem können die bisher bei kryogenen metallischen Behältern verwendeten metallischen Profildichtungen aufgrund ihrer dünnen Kontaktlinie und eventuell harten Dichtkante die Matrix und Verstärkungsfasern des Verbundwerkstoffes beschädigen und damit Undichtigkeiten und Festigkeitsverluste bewirken.

Eine weitere Herausforderung stellen bei einer Kombination von CFK-Bauteilen mit Metallbauteilen die ungleichen Wärmeausdehnungskoeffizienten dar. CFK weist einen Wärmeausdehnungskoeffizienten α₁ von etwa 0,2 ·10⁻⁶ K⁻¹ in Faserrichtung und in Höhe von 30 ·10⁻⁶ K⁻¹ senkrecht zu der Faserrichtung auf, während der Wärmeausdehnungskoeffizient α₂ für Stahl in allen Richtungen bei etwa 12 ·10⁻⁶ K⁻¹ bis 15·10⁻⁶ K⁻¹ und für Aluminium bei etwa 23 ·10⁻⁶ K⁻¹ liegt. Eine Abkühlung um ungefähr 200 °C führt daher zu einer starken Schrumpfung eines metallischen Bauteils, während ein CFK-Bauteil in Faserrichtung annähernd unverändert bleibt. Senkrecht zur Faserrichtung schrumpft ein CFK-Bauteil im Vergleich zu einem Metallbauteil deutlich stärker. Die vorstehend genannten Effekte können zu einer unterschiedlichen Schrumpfrate eines Metallbauteils und eines CFK-Bauteils in radialer Richtung führen. Ist ein Metallbauteil beispielsweise mit einem CFK-Bauteil fest verschraubt, kann ein Verbindungselement unerwünscht radial auf Biegung beansprucht werden. In ein CFK-Bauteil direkt integrierte metallische Einsätze unterliegen gleichfalls mechanischen Spannungen, die durch die unterschiedlichen thermischen Ausdehnungsraten hervorgerufen werden. Hierbei ist die Gefahr einer Delamination von Einsatz und Matrix und einer hiermit einhergehenden Undichtigkeit gegeben.

Aus der US 10 179 304 B2 ist eine Tankanschlussvorrichtung für Chemikalientanks aus Kunststoff bekannt.

Aufgabe der Erfindung ist es, ein Anschlusssystem mit einem kryogenen Tank anzugeben, bei dem aufgrund ungleicher Wärmeausdehnungskoeffizienten der miteinander kombinierten Werkstoffe thermisch bedingte mechanische Spannungen nicht zu einer radialen Belastung von Verbindungselementen führen.

Die eingangs genannte Aufgabe wird dadurch gelöst, dass an einer Tankinnenseite ein mit dem zweiten Material gebildetes Gegenstück positioniert ist, das mit Hilfe von mindestens zwei Befestigungselementen mit dem Anschlussstück verbindbar ist, derart, dass die Tankwand zwischen dem Gegenstück, dem Anschlussstück und dem mindestens einen Dichtelement eingeklemmt ist und zum Ausgleich von thermisch hervorgerufenen mechanischen Spannungen eine geringfügige Verschiebbarkeit des Anschlussstücks und des Gegenstücks parallel zu der Tankwand verbleibt.

Aufgrund der Materialgleichheit von Anschlussstück und Gegenstück werden bei tiefkalten (kryogenen) Temperaturen von gleich oder niedriger als etwa -183 °C im Tank und im Vergleich hierzu hohen Außentemperaturen von ungefähr 20 °C thermisch bedingte mechanische Spannungen innerhalb des Anschlusssystems reduziert, da die kältebedingte radiale Schrumpfung des Anschlussstücks und des Gegenstücks ungefähr gleich groß sind. Durch das an der Seite des Tanks anliegende Gegenstück ergibt sich darüber hinaus eine großflächigere Krafteinleitung etwaiger vom Anschlussstück in die Tankwand eingeleiteter Kräfte.

Vorzugsweise ist das Anschlussstück im Wesentlichen hülsenartig ausgebildet und weist an einem der Tankaußenseite zugewandten ersten Ende einen umlaufenden Befestigungsflansch und an einem hiervon weg gerichteten, zweiten Ende einen Anschlussflansch für das Bauteil auf. Hierdurch kann ein Standardbauteil als Anschlussstück Verwendung finden.

Bei einer technisch vorteilhaften Ausgestaltung sind die mindestens zwei Befestigungselemente als Gewindebolzen ausgeführt. Hierdurch ist eine Höhe der axialen Verspannung von Anschluss- und Gegenstück und damit eine resultierende Klemmkraft an der Tankwand einstellbar, so dass zumindest eine geringfügige radiale Verschiebbarkeit der genannten Komponenten bzw. eine "schwimmende Lagerung" in Bezug zur Tankwand ohne Beeinträchtigung der Abdichtungswirkung gegeben ist.

Bevorzugt ist das Gegenstück im Wesentlichen kreisringförmig ausgeführt. Hierdurch ist eine umfangsseitig gleichmäßige Krafteinleitung gewährleistet.

Im Fall einer Weiterbildung sind das Anschlussstück, das Gegenstück sowie das mindestens eine Dichtelement im Wesentlichen rotationssymmetrisch zu einer Längsmittelachse ausgebildet. Infolgedessen ist eine kostengünstige Herstellbarkeit gegeben. Das Anschlussstück, das Gegenstück sowie das Dichtelement weisen jeweils eine bevorzugt kreisrunde Öffnung auf, die im montierten Zustand des Anschlusssystems bei Raumtemperatur von etwa 20 °C vorzugsweise jeweils kongruent zueinander sowie deckungsgleich mit der Durchgangsöffnung in der Tankwand positioniert sind.

Vorzugsweise weist der Befestigungsflansch eine der Anzahl der Gewindebolzen entsprechende Anzahl von bevorzugt nicht durchgehenden Gewindebohrungen und das Gegenstück eine entsprechende Anzahl von gewindelosen Durchgangsbohrungen für die Gewindebolzen oder umgekehrt auf. Durch das Vorsehen der nicht durchgehenden Gewindebohrungen bzw. der Blindbohrungen mit Gewinde ist prinzipiell ein Dichtelement ausreichend. Das mit den nicht durchgehenden Gewindebohrungen versehene Bauteil weist jeweils kongruent zu diesen ausgebildete, gewindelose Durchgangsbohrungen auf.

Bei einer günstigen Weiterbildung ist vorgesehen, dass je nachdem, ob der Befestigungsflansch des Anschlussstücks oder das Gegenstück mit den nicht durchgehenden Gewindebohrungen versehen ist, das mindestens eine Dichtelement zwischen der Tankaußenseite und dem Befestigungsflansch und/oder zwischen dem Gegenstück und der Tankinnenseite positioniert ist. Hierdurch ist eine höhere Flexibilität bei der Montage gegeben. Je nachdem ob das Gegenstück oder das Anschlussstück mit den nicht durchgehenden Gewindebohrungen versehen sind, werden die Gewindebolzen von einem Innenraum des Tanks oder ausgehend von der Außenumgebung des Tanks eingeschraubt. Eine entsprechende Zugangsmöglichkeit zum Innenraum des Tanks ist hierbei vorausgesetzt.

Vorzugsweise ist das erste Material ein Faserverbundkunststoff, wie ein glasfaserverstärkter oder ein kohlenstofffaserverstärkter Kunststoff. Hierdurch ist ein im Vergleich zu einem Aluminiumtank leichterer Tank realisierbar.

Bevorzugterweise ist das zweite Material mit einem Metall, wie Aluminium, Titan, Edelstahl oder mit einer Metalllegierung gebildet. Hierdurch ist eine mechanisch robuste Anbindung von Bauteilen an den Tank, wie zum Beispiel Leitungen, Rohrleitungen, Sensoren oder dergleichen möglich.

Im Fall einer günstigen Weiterbildung ist das mindestens eine Dichtelement mit einem Kunststoff wie Polytetrafluorethylen (PTFE) gebildet. Aufgrund des weichen Kunststoffes wird eine Beschädigung der Tankwand durch die mit dieser verspannten Metallteile vermieden und zugleich eine zuverlässige Abdichtwirkung erreicht.

Bei einer vorteilhaften Weiterbildung ist das mindestens eine Dichtelement vorzugsweise als eine im Wesentlichen kreisringförmige Flachdichtung oder als eine federbelastete Dichtung ausgeführt. Hierdurch ist unbeschadet der Verschiebbarkeit und bei nur einem Dichtelement eine zuverlässige Abdichtungswirkung gegeben.

Im Folgenden wird ein bevorzugtes Ausführungsbeispiel der Erfindung anhand von schematischen Figuren näher erläutert. Es zeigen
- Figur 1: einen schematischen Längsschnitt durch ein Anschlusssystem nach dem Stand der Technik, und
- Figur 2: einen schematischen Längsschnitt eines erfindungsgemäßen Anschlusssystems mit einem kryogenen Tank.

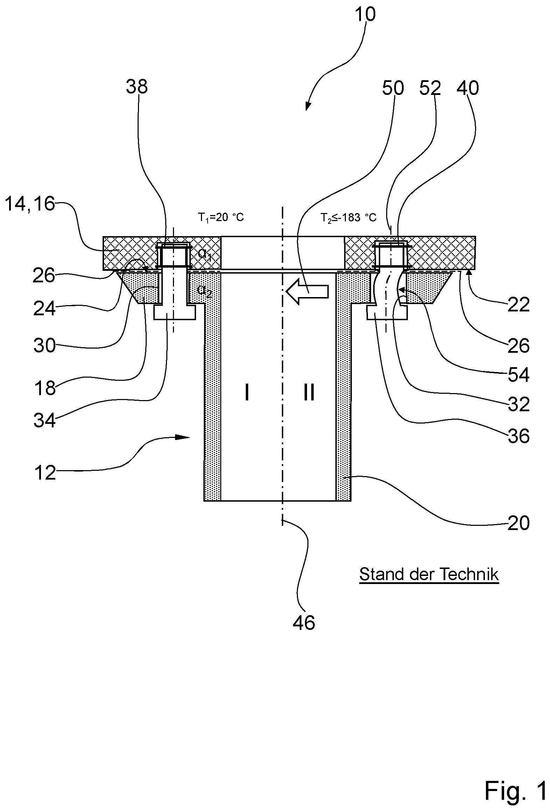

Die Figur 1 zeigt einen schematischen Längsschnitt durch ein Anschlusssystem nach dem Stand der Technik, wobei sich das Anschlusssystem in der linken Zeichnungshälfte I auf einer Temperatur T₁ von etwa 20° (Raumtemperatur) befindet, wohingegen sich das Anschlusssystem in der rechten Zeichnungshälfte II auf einer kryogenen Temperatur von kleiner oder gleich -183,15 °C (Siedetemperatur des Sauerstoffs) befindet.

Ein Anschlusssystem 10 umfasst unter anderem einen Anschlussstutzen 12 für ein an eine Tankwand 14 eines nicht näher dargestellten Tanks 16 anzuschließendes, hier nicht dargestelltes Bauteil. Der Anschlussstutzen 12 weist einen zur Anlage an der Tankwand 14 dienenden, kreisringförmigen Flansch 18 auf, der sich in einen, von der Tankwand 14 weg gerichteten, rohrförmigen Anschlussabschnitt 20 fortsetzt. Zwischen einer Außenseite 22 der Tankwand 14 und einer Dichtfläche 24 des Flansches 18 ist bevorzugt ein Dichtelement 26 vorgesehen. Die Tankwand 14 ist mit einem Faserverbundkunststoff wie einem kohlenstofffaserverstärkten Kunststoff gefertigt, während der Anschlussstutzen 12 mit einem metallischen Material wie Stahl, Titan oder Aluminium gebildet ist.

Der Flansch 18 weist eine Vielzahl von umfangsseitig gleichmäßig zueinander beabstandet angeordneten Durchgangsbohrungen auf, von denen hier lediglich zwei Durchgangsbohrungen 30, 32 repräsentativ für alle weiteren dargestellt sind. Die Befestigung des Flansches 16 an der Tankwand 14 erfolgt mit Hilfe einer, der Anzahl der Durchgangsbohrungen entsprechenden Anzahl von Gewindebolzen, die jeweils in einen zugeordneten tankwandseitigen Gewindeeinsatz eingeschraubt sind, wobei die ausgehend von der Außenseite 22 des Tanks 16 eingebrachten Gewindeeinsätze die Tankwand 14 nicht durchdringen. Von den Gewindebolzen und den Gewindeeinsätzen sind jeweils nur zwei Gewindebolzen 34, 36 sowie zwei Gewindeeinsätze 38, 40 (so genannte "Inserts") stellvertretend für alle weiteren zeichnerisch dargestellt.

Das Anschlusssystem 10 ist, abgesehen von temperaturbedingten Dehnungs- und Schrumpfungseffekten, rotationssymmetrisch zu einer Längsmittelachse 46 aufgebaut. In einer linken Zeichnungshälfte I befindet sich das Anschlusssystem 10 auf Raumtemperatur bzw. einer Temperatur T₁ von ungefähr 20 °C, wohingegen sich das Anschlusssystem 10 in einer zweiten Zeichnungshälfte II auf einer kryogenen Temperatur von gleich oder weniger als -183,15 °C befindet.

Ein mit einem kohlenstoffverstärkten Kunststoff gebildetes Material bzw. Werkstoff weist einen Wärmeausdehnungskoeffizienten α₁ von etwa 0,2 ·10⁻⁶ K⁻¹ in Faserrichtung und in Höhe von 30 ·10⁻⁶ K⁻¹ senkrecht zu der Faserrichtung auf, während der Wärmeausdehnungskoeffizient α₂ für ein Material wie Stahl in allen Raumrichtungen bei etwa 12 ·10⁻⁶ K⁻¹ bis 15 ·10⁻⁶ K⁻¹ und für Aluminium bei etwa 23 ·10⁻⁶ K⁻¹ liegt. Aufgrund dieser erheblich voneinander abweichenden Wärmeausdehnungskoeffizienten α_{1,2} der eingesetzten Materialien kommt es bei einer Abkühlung des Tanks 16 um etwa 200 °C, wie sie beim Befüllen mit einem kryogenen Sauerstoff ausgehend von Raumtemperatur aufritt, zu erheblichen Schrumpfungseffekten des Anschlussstutzens 12 in Relation zu der sich nur minimal zusammenziehenden Tankwand 14 des Tanks 16, wie mit dem weißen Pfeil 50 angedeutet ist. Dadurch kommt es hier beispielhaft zu einer erheblichen mechanischen radialen Belastung des Gewindebolzens 36 quer zu dessen Längsmittelachse 52. Die thermisch bedingte mechanische Belastung des Gewindebolzens 36 kann so hoch werden, dass es zu einer plastischen Deformation desselben kommt, was mit dessen abschnittsweise stark gekrümmter Außenkontur 54 symbolisch angedeutet ist.

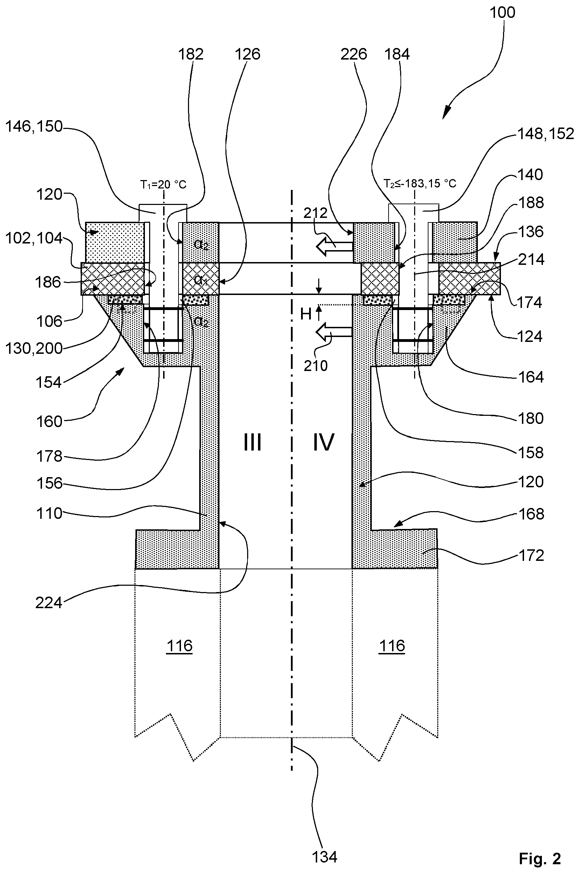

Aufgrund dieser vorstehend skizierten temperaturbedingten Schrumpfungseffekte des Anschlusssystems 10 kommt es zu unerwünschten mechanischen Spannungen zwischen der Tankwand 14 und dem Anschlussstutzen 12 des Anschlusssystems 10, die beim erfindungsgemäßen Anschlusssystem (vgl. hierzu Fig. 2) weitestgehend vermieden werden. Die Figur 2 illustriert einen schematischen Längsschnitt eines erfindungsgemäßen Anschlusssystems, wobei sich das Anschlusssystem in der linken Zeichnungshälfte III auf einer Temperatur T₁ von etwa 20° (Raumtemperatur) befindet, wohingegen sich das Anschlusssystem in der rechten Zeichnungshälfte IV auf einer kryogenen Temperatur von kleiner oder gleich -183,15 °C (Siedetemperatur des Sauerstoffs) befindet.

Ein Anschlusssystem 100 mit einem kryogenen Tank 102, dessen Tankwand 104 mit einem ersten Material 106 gebildet ist, umfasst unter anderem ein Anschlussstück 110 für ein daran anzubindendes Bauteil 116. Das Anschlussstück 110 ist mit einem zweiten Material 120 gebildet. Das Anschlussstück 110 ist an einer Tankaußenseite 124 im Wesentlichen kongruent zu einer Durchgangsöffnung 126 in der Tankwand 104 angeordnet. Zur Abdichtung ist hier lediglich exemplarisch ein Dichtelement 130 vorgesehen. Das Anschlusssystem 100 ist abgesehen von thermisch bedingten Schrumpfungs- oder Dehnungseffekten im Wesentlichen rotationssymmetrisch zu einer Längsmittelachse 134 aufgebaut.

Bei dem ersten Material 106 der Tankwand 104 handelt es sich um einen Faserverbundkunststoff, wie einen kohlenstofffaserverstärkten Kunststoff (CFK). Alternativ kann die Tankwand 104 auch mit einem glasfaserverstärkten Kunststoff (GFK) oder mit einem mit Aramid^{®}-Faser verstärkten Kunststoff gebildet sein. Das erste Material 106 weist einen Wärmeausdehnungskoeffizienten α₁ auf, der bei etwa 0,2 ·10⁻⁶ K⁻¹ in Faserrichtung und bei etwa 30 ·10⁻⁶ K⁻¹ senkrecht zu dieser liegt. Das zweite Material 120 des Anschlussstücks 110 ist ein homogener metallischer Werkstoff wie Aluminium, Stahl oder Titan. Ist das zweite Material 120 Stahl oder Aluminium, liegt ein richtungsunabhängiger Wärmeausdehnungskoeffizient α₂ im Fall von Stahl in einem Bereich von 12 ·10⁻⁶ K⁻¹ bis zu 15 ·10⁻⁶ K⁻¹ und im Fall von Aluminium bzw. einer Aluminiumlegierung bei etwa 23 ·10⁻⁶ K⁻¹. An einer Tankinnenseite 136 ist ein gleichfalls mit dem zweiten Material 120 gebildetes, näherungsweise kreisringförmiges Gegenstück 140 positioniert, das mit Hilfe von mindestens zwei Befestigungselementen mit dem Anschlussstück 110 verbindbar ist, derart, dass die Tankwand 104 zwischen dem Gegenstück 140, dem Anschlussstück 110 sowie dem Dichtelement 130 zuverlässig eingeklemmt bzw. eingespannt ist. Hierbei verbleibt zum Ausgleich von thermisch hervorgerufenen mechanischen Spannungen aufgrund der unterschiedlichen Wärmeausdehnungskoeffizienten zumindest eine geringfügige Verschiebbarkeit des Anschlussstücks 110 und des Gegenstücks 140 parallel zu der Tankwand 104. Eine Materialstärke des Gegenstücks 140 entspricht ungefähr einer Materialstärke der Tankwand 104.

Von den bevorzugt umfangsseitig gleichmäßig zueinander angeordneten Befestigungselementen sind hier lediglich zwei Befestigungselemente 146, 148 stellvertretend für alle Übrigen dargestellt und bezeichnet. Die Befestigungselemente 146, 148 sind hier nur beispielhaft als Gewindebolzen 150, 152 ausgeführt. Das Dichtelement 130 ist in einer umlaufenden Nut 154 (Ringnut) mit einer im Wesentlichen U-förmigen Querschnittsgeometrie aufgenommen und weist Durchgangsöffnungen 156, 158 für jeweils eines der Befestigungselemente 146, 148 sowie Durchgangsöffnungen für die in der Fig. 2 nicht darstellbaren Befestigungselemente auf. Die umlaufende Nut 154 in dem Befestigungsflansch 164 erstreckt sich hierbei in radialer Richtung (radial ein- und auswärts) beidseits der Befestigungselemente 146, 148 sowie der nicht sichtbaren Befestigungselemente, nimmt aber nicht die vollständige radiale Breite einer Kontaktfläche 174 des Befestigungsflansches 164 ein.

Das Anschlussstück 110 ist im Wesentlichen hülsenartig ausgeführt und weist an einem der Tankaußenseite 124 zugewandten ersten Ende 160 einen umlaufenden Befestigungsflansch 164 und an einem hiervon axial weg gerichteten zweiten Ende 168 einen Anschlussflansch 172 für das anzubindende Bauteil 116 auf. Die U-förmige Nut 154 in dem Befestigungsflansch 164 ist derart ausgebildet, dass das Dichtelement 130 im verspannten Zustand von Gegenstück 140, Tankwand 104 und Anschlussstück 110 im Wesentlichen in axialer Richtung soweit komprimiert ist, dass sie bündig mit der Kontaktfläche 174 des Befestigungsflansches 164 abschließt.

Anstelle des Dichtelementes 130 und der U-förmigen Nut 154 kann ein der besseren zeichnerischen Übersicht halber nicht bezeichnetes Dichtelement in einer sich nur radial auswärts in Bezug zu den Befestigungselementen 146, 148 im Befestigungsflansch 164 erstreckenden, umlaufenden und U-förmigen Nut - wie in Fig. 2 lediglich mit einer gestrichelten Umrissdarstellung zeichnerisch angedeutet - vorgesehen sein. In einer solchen Konstellation kann das Dichtelement auch als eine Profildichtung oder dergleichen ausgeführt sein.

Der Befestigungsflansch 164 weist eine der Anzahl der Gewindebolzen 150, 152 entsprechende Anzahl von vorzugsweise nicht durchgehenden Gewindebohrungen 178, 180 auf, wohingegen in das Gegenstück 140 eine entsprechende Anzahl von gewindelosen Durchgangsbohrungen 182, 184 zum Durchführen der Gewindebolzen 150, 152 eingebracht ist. Um das Durchführen der Gewindebolzen 150, 152 durch die Tankwand 104 zu ermöglichen, weist diese gleichfalls eine der Anzahl der Gewindebolzen 150, 152 entsprechende Anzahl von gewindelosen sowie umfangsseitig bevorzugt gleichmäßig zueinander beabstandet angeordneten Durchgangsbohrungen 186, 188 auf. Die Gewindebohrungen 178, 180 in dem Anschlussstück 110, die Durchgangsbohrungen 182, 184 in dem Gegenstück 140 sowie die Durchgangsbohrungen 186, 188 in der Tankwand 104 sind jeweils im Wesentlichen kongruent zueinander ausgebildet. Abweichend von der Darstellung in der Fig. 2 können die nicht durgehenden Gewindebohrungen 178, 180 auch in das Gegenstück 140 eingebracht sein, während dann eine entsprechende Anzahl von gewindelosen Durchgangsbohrungen innerhalb des Befestigungsflansches 164 des Anschlussstücks 110 vorgesehen ist (nicht dargestellt). Die Befestigungselemente 146, 148 werden in einem solchen Fall um 180° verdreht in Relation zu der Darstellung von Fig. 2, also ausgehend von der Tankaußenseite 124 eingesetzt. Dies kann bei einem erschwerten Zugang in den Tankinnenraum vorteilhaft sein.

Aufgrund der axial nicht durchgehenden Gewindebohrungen 178, 180 in dem Gegenstück 140 reduziert sich der abdichtungstechnische Aufwand des Anschlusssystems 100. Je nachdem, ob der Befestigungsflansch 164 des Anschlussstücks 110 oder das Gegenstück 140 mit den nicht durchgehenden Gewindebohrungen 178, 180 ausgestattet ist, ist das Dichtelemente 130 zwischen der Tankwand 104 und dem Befestigungsflansch 164 des Anschlussstücks 110 und/oder zwischen dem Gegenstück 140 und der Tankinnenseite 136 positioniert. Gegebenenfalls sind weitere Dichtelemente für eine vollständige Abdichtung der Leckagewege des Anschlusssystems 100 vorzusehen.

Das Dichtelement 130 ist hier lediglich exemplarisch als eine kreisringförmige Flachdichtung 200 mit einer geringen axialen Höhe H ausgeführt, können alternativ aber auch mit O-Ringen oder mit federbelasteten Dichtungen realisiert sein. Das Dichtelement 130 ist bevorzugt mit Polytetrafluorethylen (PTFE bzw. Teflon^{®}) realisiert.

In der ersten, linksseitigen Zeichnungshälfte III befindet sich das Anschlusssystem 100 auf Raumtemperatur, das heißt auf einer Temperatur T₁ von etwa 20 °C. Durch das Befüllen des Tanks 102 mit einem kryogenen bzw. tiefkalten Treibstoff, wie flüssigem Sauerstoff bei einer Temperatur von gleich oder weniger als -183,15 °C, kommt es zu einer starken Abkühlung des Anschlusssystems 100 in einer Größenordnung von 200 °C oder mehr und damit einhergehend zu erheblichen mechanischen Schrumpfungseffekten des mit dem zweiten, metallischen Material 120 gebildeten Anschlussstücks 110 und des Gegenstücks 140. Aufgrund der Materialgleichheit von Anschlussstück 110 und Gegenstück 140 sind die abkühlungsbedingten Schrumpfraten - wie mit den beiden Pfeilen 210, 212 angedeutet - jedoch im Wesentlichen gleich groß, so dass es im Gegensatz zu vorbekannten Anschlusssystemen zu keiner plastischen Deformation des Befestigungselements 148 quer zu seiner zugeordneten Längsmittelachse 214 kommen kann, solange das Befestigungselement 148 nicht mit einer hohen radialen Kraft zur Anlage an die Durchgangsbohrung 188 innerhalb der Tankwand 104 gebracht wird. Dasselbe gilt für die Durchgangsbohrung 186 in der Tankwand 104 im Hinblick auf das darin befindliche Befestigungselement 146. Vor diesem Hintergrund ist es von Vorteil, einen Querschnitt der Durchgangsbohrungen 186, 188 in der Tankwand 102 größer zu bemessen, als die Querschnitte der Durchgangsbohrungen 182, 184 in dem Gegenstück 140, um genügend radiales Spiel zur Kompensation der thermisch bedingten Schrumpf- und Ausdehnungsraten des Anschlussstücks 110 und des Gegenstücks 140 zur Verfügung zu haben. Das Dichtelement 130 dienen einerseits der fluidischen Abdichtung und anderseits zum Reduzieren der Gefahr einer mechanischen Beschädigung der mit einem Faserverbundkunststoff gebildeten Tankwand 104 durch das beidseitige mechanische Einspannen zwischen dem mit einem metallischen Material gebildeten Anschlussstück 110 und dem gleichfalls mit dem metallischen Material gebildeten Gegenstück 140.

Im montierten Zustand von Fig. 2 sind schließlich die Durchgangsöffnung 126 in der Tankwand 104, sowie im Wesentlichen zylindrische Durchgangsöffnungen 224, 226 näherungsweise kongruent zueinander positioniert, um einen möglichst geringen Strömungswiderstand für ein durchtretendes Fluid zu erreichen.

Die Erfindung betrifft ein Anschlusssystem (100) für einen kryogenen Tank (102), dessen Tankwand (104) mit einem ersten Material (106) gebildet ist, wobei das Anschlusssystem (100) ein Anschlussstück (110) für ein an den Tank (102) anzubindendes Bauteil (116) aufweist, und wobei das Anschlussstück (110) mit einem zweiten Material (120) gebildet ist und das Anschlussstück (110) an einer Tankaußenseite (124) und im Wesentlichen deckungsgleich zu einer Durchgangsöffnung (126) der Tankwand (104) positioniert ist, und wobei mindestens ein Dichtelement (130) vorgesehen ist, und das erste und das zweite Material (106, 120) unterschiedliche Wärmeausdehnungskoeffizienten (α_{1,2}) aufweisen.

Erfindungsgemäß ist vorgesehen, dass an einer Tankinnenseite (136) ein mit dem zweiten Material (120) gebildetes Gegenstück (140) positioniert ist, das mit Hilfe von mindestens zwei Befestigungselementen (146, 148) mit dem Anschlussstück (110) verbindbar ist, derart, dass die Tankwand (104) zwischen dem Gegenstück (140), dem Anschlussstück (110) und dem mindestens einen Dichtelement (130) eingeklemmt ist und zum Ausgleich von thermisch hervorgerufenen mechanischen Spannungen eine geringfügige Verschiebbarkeit des Anschlussstücks (110) und des Gegenstücks (140) parallel zu der Tankwand (104) verbleibt.

Aufgrund der Materialgleichheit von Anschlussstück (110) und Gegenstück (140) und der hierdurch bewirkten identischen thermischen Schrumpf- und Ausdehnungsraten im Fall hoher Temperaturschwankungen im Bereich von 200 °C wird die Entstehung von auf die Befestigungselemente (146, 148) einwirkenden Querkräften vermieden.

### Bezugszeichenliste

- 10: Anschlusssystem (SdT)
- 12: Anschlussstutzen
- 14: Tankwand
- 16: Tank
- 18: Flansch
- 20: Anschlussabschnitt
- 22: Außenseite (Tankwand)
- 24: Dichtfläche
- 26: Dichtelement
- 30: Durchgangsbohrung
- 32: Durchgangsbohrung
- 34: Gewindebolzen
- 36: Gewindebolzen
- 38: Gewindeeinsatz
- 40: Gewindeeinsatz
- 46: Längsmittelachse
- 50: weißer Pfeil
- 52: Längsmittelachse (Gewindebolzen)
- 54: Außenkontur (Gewindebolzen)
- 100: Anschlusssystem
- 102: Tank
- 104: Tankwand
- 106: erstes Material (Faserverbundkunststoff)
- 110: Anschlussstück
- 116: Bauteil
- 120: zweites Material (Metall)
- 124: Tankaußenseite
- 126: Durchgangsöffnung (Tankwand)
- 130: Dichtelement
- 134: Längsmittelachse
- 136: Tankinnenseite
- 140: Gegenstück
- 146: Befestigungselement
- 148: Befestigungselement
- 150: Gewindebolzen
- 152: Gewindebolzen
- 154: Nut
- 156: Durchgangsöffnung (Dichtelement)
- 158: Durchgangsöffnung (Dichtelement)
- 160: erstes Ende (Anschlussstück)
- 164: Befestigungsflansch (Anschlussstück)
- 168: zweites Ende (Anschlussstück)
- 172: Anschlussflansch (Anschlussstück)
- 174: Kontaktfläche (Befestigungsflansch)
- 178: Gewindebohrung (Anschlussstück)
- 180: Gewindebohrung (Anschlussstück)
- 182: Durchgangsbohrung (Gegenstück)
- 184: Durchgangsbohrung (Gegenstück)
- 186: Durchgangsbohrung (Tankwand)
- 188: Durchgangsbohrung (Tankwand)
- 200: Flachdichtung
- 210: Pfeil
- 212: Pfeil
- 214: Längsmittelachse
- 216: Durchgangsbohrung (Tankwand)
- 218: Durchgangsbohrung (Tankwand)
- 224: Durchgangsöffnung (Anschlussstück)
- 226: Durchgangsöffnung (Gegenstück)
- α₁: Wärmeausdehnungskoeffizient
- α₂: Wärmeausdehnungskoeffizient
- H: Höhe (Dichtelemente)
- T_{1,2}: Temperatur
- I: erste Zeichnungshälfte
- II: zweite Zeichnungshälfte
- III: dritte Zeichnungshälfte
- IV: vierte Zeichnungshälfte

## Patentansprüche

1. Anschlusssystem (100) mit einem kryogenen Tank (102), dessen Tankwand (104) mit einem ersten Material (106) gebildet ist, und mit einem Anschlussstück (110) für ein an den Tank (102) anzubindendes Bauteil (116),
wobei das Anschlussstück (110) mit einem zweiten Material (120) gebildet ist und das Anschlussstück (110) an einer Tankaußenseite (124) und im Wesentlichen deckungsgleich zu einer Durchgangsöffnung (126) der Tankwand (104) positioniert ist, und wobei mindestens ein Dichtelement (130) vorgesehen ist, und das erste und das zweite Material (106, 120) unterschiedliche Wärmeausdehnungskoeffizienten (α_{1,2}) aufweisen, **dadurch gekennzeichnet, dass** an einer Tankinnenseite (136) ein mit dem zweiten Material (120) gebildetes Gegenstück (140) positioniert ist, das mit Hilfe von mindestens zwei Befestigungselementen (146, 148) mit dem Anschlussstück (110) verbindbar ist, derart, dass die Tankwand (104) zwischen dem Gegenstück (140), dem Anschlussstück (110) und dem mindestens einen Dichtelement (130) eingeklemmt ist und zum Ausgleich von thermisch hervorgerufenen mechanischen Spannungen eine geringfügige Verschiebbarkeit des Anschlussstücks (110) und des Gegenstücks (140) parallel zu der Tankwand (104) verbleibt.

2. Anschlusssystem (100) nach Patentanspruch 1, wobei das Anschlussstück (110) im Wesentlichen hülsenartig ausgebildet ist und an einem der Tankaußenseite (124) zugewandten ersten Ende (160) einen umlaufenden Befestigungsflansch (164) und an einem hiervon weg gerichteten, zweiten Ende (168) einen Anschlussflansch (172) für das Bauteil (116) aufweist.

3. Anschlusssystem (100) nach Patentanspruch 2, wobei die mindestens zwei Befestigungselemente (146, 148) als Gewindebolzen (150, 152) ausgeführt sind.

4. Anschlusssystem (100) nach Patentanspruch 1, 2 oder 3, wobei das Gegenstück (140) im Wesentlichen kreisringförmig ausgeführt ist.

5. Anschlusssystem (100) nach einem der Patentansprüche 1 bis 4, wobei das Anschlussstück (110), das Gegenstück (140) sowie das mindestens eine Dichtelement (130) im Wesentlichen rotationssymmetrisch zu einer Längsmittelachse (134) ausgebildet sind.

6. Anschlusssystem (100) nach einem der Patentansprüche 1 bis 5, wobei der Befestigungsflansch (164) eine der Anzahl der Gewindebolzen (150, 152) entsprechende Anzahl von bevorzugt nicht durchgehenden Gewindebohrungen (178, 180) und das Gegenstück (140) eine entsprechende Anzahl von gewindelosen Durchgangsbohrungen (182, 184) für die Gewindebolzen (150, 152) oder umgekehrt aufweist.

7. Anschlusssystem (100) nach Patentanspruch 6, wobei je nachdem, ob der Befestigungsflansch (164) des Anschlussstücks (110) oder das Gegenstück (140) mit den nicht durchgehenden Gewindebohrungen (178, 180) versehen ist, das mindestens eine Dichtelement (130, 132) zwischen der Tankaußenseite (124) und dem Befestigungsflansch (164) und/oder zwischen dem Gegenstück (140) und der Tankinnenseite (136) positioniert ist.

8. Anschlusssystem (100) nach einem der Ansprüche 1 bis 7, wobei das erste Material (106) ein Faserverbundkunststoff, wie ein glasfaserverstärkter oder ein kohlenstofffaserverstärkter Kunststoff ist.

9. Anschlusssystem (100) nach Patentanspruch 8, wobei das zweite Material (120) mit einem Metall, wie Aluminium, Titan, Edelstahl oder mit einer Metalllegierung gebildet ist.

10. Anschlusssystem (100) nach Patentanspruch 8 oder 9, wobei das mindestens eine Dichtelement (130) mit einem Kunststoff wie Polytetrafluorethylen (PTFE) gebildet ist.

11. Anschlusssystem (100) nach Patentanspruch 10, wobei das mindestens eine Dichtelement (130) vorzugsweise als eine im Wesentlichen kreisringförmige Flachdichtung (200) oder als eine federbelastete Dichtung ausgeführt ist.

## Claims

1. A connection system (100) with a cryogenic tank (102), the tank wall (104) of which is formed with a first material (106), and with a connecting piece (110) for a component (116) to be connected to the tank (102),
wherein the connecting piece (110) is formed with a second material (120) and the connecting piece (110) is positioned on an exterior side (124) of the tank and substantially congruently with a through opening (126) of the tank wall (104), and wherein at least one sealing element (130) is provided, and the first and the second materials (106, 120) have different thermal expansion coefficients (α_{1,2}), **characterized in that** a counterpart (140) formed with the second material (120) is positioned on an interior side (136) of the tank, the counterpart being connectable to the connecting piece (110) with the aid of at least two fastening elements (146, 148) in a manner such that the tank wall (104) is clamped between the counterpart (140), the connecting piece (110) and the at least one sealing element (130), and in order to compensate for thermally induced mechanical stresses, there remains a slight displaceability of the connecting piece (110) and of the counterpart (140) parallel to the tank wall (104).

2. The connection system (100) as claimed in patent claim 1, wherein the connecting piece (110) is substantially sleeve-like in construction and has a continuous fastening flange (164) on a first end (160) which faces the exterior side (124) of the tank and a connecting flange (172) for the component (116) on a second end (168) which is directed away from the fastening flange.

3. The connection system (100) as claimed in patent claim 2, wherein the at least two fastening elements (146, 148) are configured as threaded bolts (150, 152).

4. The connection system (100) as claimed in patent claims 1, 2 or 3, wherein the counterpart (140) is substantially annular in configuration.

5. The connection system (100) as claimed in one of patent claims 1 to 4, wherein the connecting piece (110), the counterpart (140) as well as the at least one sealing element (130) are substantially rotationally symmetrical in configuration about a longitudinal centre line (134).

6. The connection system (100) as claimed in one of patent claims 1 to 5, wherein the fastening flange (164) has a number of preferably non-through threaded holes (178, 180) which corresponds to the number of threaded bolts (150, 152), and the counterpart (140) has a corresponding number of non-threaded through holes (182, 184) for the threaded bolts (150, 152), or vice versa.

7. The connection system (100) as claimed in patent claim 6 wherein, depending on whether the fastening flange (164) of the connecting piece (110) or the counterpart (140) is provided with the non-through threaded holes (178, 180), the at least one sealing element (130, 132) is positioned between the exterior side (124) of the tank and the fastening flange (164) and/or between the counterpart (140) and the interior side (136) of the tank.

8. The connection system (100) as claimed in one of patent claims 1 to 7, wherein the first material (106) is a fibre composite plastic such as a glass fibre reinforced plastic or a carbon fibre reinforced plastic.

9. The connection system (100) as claimed in patent claim 8, wherein the second material (120) is formed with a metal such as aluminium, titanium, stainless steel or with a metal alloy.

10. The connection system (100) as claimed in patent claim 8 or 9, wherein the at least one sealing element (130) is formed with a plastic such as polytetrafluoroethylene (PTFE).

11. The connection system (100) as claimed in patent claim 10, wherein the at least one sealing element (130) is preferably configured as a substantially annular flat seal (200) or as a spring-loaded seal.

## Revendications

1. Système de raccordement (100) sur une cuve cryogénique (102), dont la paroi (104) de cuve est constituée en une première matière (106) et comprenant une pièce de raccordement (110) pour un élément structurel (116) qui doit être rattaché à la cuve (102),
la pièce de raccordement (110) étant constituée en une deuxième matière (120) et la pièce de raccordement (110) étant positionnée sur une face extérieure (124) de la cuve et en recouvrant sensiblement un orifice de passage (126) de la paroi (104) de cuve et au moins un élément d'étanchéité (130) étant prévu et la première et la deuxième matières (106, 120) faisant preuve de différents coefficients de dilatation thermique (α_{1,2}), **caractérisé en ce que** sur une face intérieure (136) de la cuve est positionnée une pièce antagoniste (140) constituée de la deuxième matière (120), qui à l'aide d'au moins deux éléments de fixation (146, 148) est susceptible d'être assemblée avec la pièce de raccordement (110), de telle sorte que la paroi (104) de cuve soit serrée entre la pièce antagoniste (140), la pièce de raccordement (110) et l'au moins un élément d'étanchéité (130) et que pour compenser des contraintes mécaniques dues à des phénomènes thermiques, il subsiste une faible capacité de déplacement de la pièce de raccordement (110) et de la pièce antagoniste (140) à la parallèle de la paroi (104) de cuve.

2. Système de raccordement (100) selon la revendication 1 du brevet, la pièce de raccordement (110) étant conçue sensiblement en forme de douille et sur une première extrémité (160) dirigée vers la face extérieure (124) de la cuve, comportant une bride de fixation (164) périphérique et sur une deuxième extrémité (168) dirigée en éloignement de celle-ci, comportant une bride de raccordement (172) pour l'élément structurel (116).

3. Système de raccordement (100) selon la revendication 2, les au moins deux éléments de fixation (146, 148) étant réalisés sous la forme de boulons filetés (150, 152).

4. Système de raccordement (100) selon la revendication 1, 2 ou 3 du brevet, la pièce antagoniste (140) étant sensiblement réalisée en forme d'anneau circulaire.

5. Système de raccordement (100) selon l'une quelconque des revendications 1 à 4 du brevet, la pièce de raccordement (110), la pièce antagoniste (140) ainsi que l'au moins un élément d'étanchéité (130) étant réalisés de manière sensiblement symétrique en rotation par rapport à un axe médian longitudinal (134).

6. Système de raccordement (100) selon l'une quelconque des revendications 1 à 5, la bride de fixation (164) comportant un nombre correspondant au nombre de boulons filetés (150, 152) de taraudages (178, 180), de préférence non traversants et la pièce antagoniste (140) comportant un nombre correspondant de perçages traversants (182, 184) non filetés pour les boulons filetés (150, 152) ou inversement.

7. Système de raccordement (100) selon la revendication 6 du brevet, en fonction du fait si la bride de fixation (164) de la pièce de raccordement (110) ou la pièce antagoniste (140) est munie des taraudages (178, 180) non traversants, l'élément d'étanchéité (130, 132) étant positionné entre la face extérieure (124) de la cuve et la bride de fixation (164) et / ou entre la pièce antagoniste (140) et la face intérieure (136) de la cuve.

8. Système de raccordement (100) selon l'une quelconque des revendications 1 à 7, la première matière (106) étant une matière plastique composite renforcée par fibres, telle qu'une matière plastique renforcée par fibres de verre ou par fibres de carbone.

9. Système de raccordement (100) selon la revendication 8 du brevet, la deuxième matière (120) étant constituée d'un métal, tel que l'aluminium, le titane, l'acier inoxydable ou un alliage métallique.

10. Système de raccordement (100) selon la revendication 8 ou 9 du brevet, l'au moins un élément d'étanchéité (130) étant constitué d'une matière plastique, telle que le polytétrafluoroéthylène (PTFE).

11. Système de raccordement (100) selon la revendication 10, l'au moins un élément d'étanchéité (130) étant réalisé de préférence sous la forme d'un joint plat (200) sensiblement en forme d'anneau circulaire ou sous la forme d'un joint contraint par ressort.
